# EUROPEAN PATENT SPECIFICATION

(11) **EP 2 562 048 B1**
(45) Date of publication and mention of the grant of the patent: **19.02.2014**
(21) Application number: 11178887.3
(22) Date of filing: 25.08.2011
(51) Int. Cl.: B60R 9/10

(54) **Wheel holder for a bicycle rack and a bicycle rack having a wheel holder**
Radhalter für einen Fahrradträger und Fahrradträger mit dem Radhalter
Support de roue pour porte-vélo et porte-vélo doté d'un support de roue

(43) Date of publication of application: 27.02.2013
(73) Proprietor: Thule Sweden AB, 330 33 Hillerstorp (SE)
(72) Inventor: Andersson, Stefan, S-331 41 Värnamo (SE); Tjäderborn, Niclas, S-556 30 Jönköping (SE)

(56) References cited:
- WO-A1-01/38141
- WO-A1-2009/158358
- DE-A1- 19 934 384
- US-A- 4 629 104
- US-A1- 2007 164 065

## Description

### TECHNICAL FIELD

The present invention relates to a wheel holder for a bicycle rack and a bicycle rack having at least one wheel holder. The wheel holder has a simple and user friendly expander lock function by which the position of the wheel holder can be easily displaced, and fixed, along the length of the bicycle rack permitting transportation of bicycles of varying sizes on the bicycle rack.

### BACKGROUND OF THE INVENTION

Bicycle racks are used to transport bicyces on vehicles. The patent application, WO 89/01864, discloses a bicycle rack having a wheel holder which is attached around an elongated bar, or support bar. The wheel holder comprises two grip members which extends around two opposing sides of the elongated bar. The two grip members cooperate with a flexible string connected to a tensioning member to secure the wheel holder to the elongated bar. The flexible string is rapped around a protrusion extending out from the surface of the wheel holder to secure the wheel to the wheel holder. A predetermined number of protrusions provides for a predetermined number of positions for the flexible string underneath the bar. Although the wheel holder is slideable along the length of the elongated bar, the configuration of the wheel holder requires that the flexible string is released before a user can displace the wheel holder. The heel holder further requires that the two grip members are forced apart to enable the wheel holder to slide along the elongated bar.

The US patent application no. US 2007/0164065 A1 disclose a bicycle holder for a bicycle rack. The bicycle holder comprises two engagement members adapted to engage in two tracks. The engagement members embrace the bicycle rack and are said to be configured to be slideably engaged with the tracks. A securing portion in the form of a strap is used to secure the wheel of the to the bicycle holder.

### SUMMARY

It is an object of the present Invention to provide for a user friendly wheel holder which enables a user to easy displace and adjust the position of the wheel holder with respect to the bicycle rack to enable bicycles of different sizes to be transported using the bicycle rack. The object is met by a bicycle holder, such as a wheel holder, for a bicycle rack. The bicycle rack can optionally be provided with a groove for attaching the wheel holder to the bicycle rack. The wheel holder comprises a body, a first grip portion displaceably arranged to a second grip portion, the first and the second grip portions are adapted to engage a first and a second surface of the bicycle rack to retain the bicycle holder to the bicycle rack. At least one of the first and the second grip portions is/are adapted to be temporarily displaced in a direction towards the other, optionally by deforming parts of the body, wherein the first and the second grip portions are temporarily disengaged from, or removed from contact with, the first and second surfaces of the bicycle rack, enabling the position of the wheel holder to be adjusted along the length of the bicycle rack, or the bicycle holder to be removed from the bicycle rack.

The bicycle holder is easy to displace along the length of the bicycle rack as a user can grab the bicycle holder and disengage the first and the second grip portions without releasing the bicycle holder, and thereafter move the bicycle holder using substantially one continuous motion. The bicycle holder thus has a simple and user friendly fixation function using friction as primary fixation means by which the position of the bicycle holder can be easily displaced, and fixed, along the length of the bicycle rack.

According to an aspect, the bicycle holder comprises a retaining mechanism adapted to retain a wheel of the bicycle to the bicycle holder.

According to an aspect, the bicycle holder is a wheel holder, and In that the part of the bicycle is a wheel.

According to an aspect, the bicycle rack has at least one groove for attaching the bicycle holder to the bicycle rack, and in that the first and second surfaces are formed by parts of the groove. The first and second surfaces of the groove are advantageously intersecting the first and the second grip portions so that they are positioned substantially between the grip portions of the body of the bicycle holder and the part of the bicycle received by the bicycle holder, e.g. the wheel.

According to an aspect, the both of the first and the second grip portions are adapted to be displaced towards each other.

According to an aspect, the body of the bicycle holder and the first and second grip portions are formed in a unitary piece of material. The body, together with the first and the second grip portions, can be form moulded for example. Optionally the first and the second grip portions can be attached to the body as separate elements.

According to an aspect, the first and second grip portions comprise a tilting surface adapted to cooperate with a first and second surface of the bicycle rack. The tilting surfaces enable the first and the second grip portions to better engage the first and the second surface of the groove of bicycle rack as they provide for an upwardly directed force component acting on the bicycle holder to force the bicycle holder into engagement with the first and the second surfaces of the groove of bicycle rack.

According to an aspect, the tilting surfaces of the first and the second grip portions are arranged at an angle α with respect to a axis Z. The angle α can be between 30-60°.

According to an aspect, the body comprises at least one slit. The at least one slit of the body enables the body to be deformed so that the distance between the first and the second grip portions can be decreased, As the distance between the first and the second grip portions is decreased, the first and the second grip portions can disengage the first and the second surfaces of the groove, and enable the bicycle holder to be displaced. As the body of the bicycle holder is released, the body returns to its original form, or substantially to its original form, i.e. it might be somewhat restricted from returning to its original form by the groove of the bicycle rack.

According to an aspect, the first and second grip portions are separated by the at least one slit. According to an aspect, the body comprises two or more slits which separates the first grip portion from the second grip portion.

According to an aspect, the body of the bicycle holder has a front side, a first and a second longitudinal side, and at least one slit arranged in the front side of the body of the bicycle holder.

According to an aspect, the first and the second grip portion extends out from the first and the second longitudinal sides of the body of the bicycle holder.

According to an aspect, the body of the bicycle holder is formed by a peripheral wall defining a substantially hollow interior, and the first and the second grip portions are formed by a first and a second portion of the peripheral wall. The first and the second grip portions can be formed by parts of the first and the second longitudinal sides of the body of the bicycle holder.

According to an aspect, the body and/or the first and second grip portions are adapted to be elastically deformable, enabling a user to temporarily deform the first and the second grip members towards each other and thus counteracting the expander lock function to adjust the position of the bicycle holder with respect to the bicycle rack, or to remove the bicycle holder from the bicycle rack.

According to an aspect, the first and the second grip portions each comprises a grip surface adapted to cooperate with the groove of the bicycle rack. The grip surfaces of the first and the second grip portions are manufactured from a material providing a high friction surface between the grip surfaces of the first and the second grip portions and the groove of the bicycle rack.

According to an aspect, the retaining mechanism cooperates with the first and the second grip portions so that upon activation of the retaining mechanism, the first and the second grip portions are imparted with a force component acting to increase the distance between the first and the second grip portions of the body of the bicycle holder.

According to an aspect, the present invention also relates to a bicycle rack comprising a first and a second bicycle holder. The bicycle rack comprises a groove, and is adapted to be mounted to a vehicle. The first and the second bicycle holders are displaceably arranged in, and along, the groove of the bicycle rack.

According to an aspect, the groove of the bicycle rack is adapted to receive a first and a second wheel of the bicycle. The first and the second wheel of the bicycle can thus use the same groove which is used for attaching the bicycle holder to the bicycle rack.

According to an aspect, the bicycle holder comprises a body with a first and a second displaceable grip portion adapted to grip a first and a second surface of the groove of the bicycle rack to retain the bicycle holder in the groove of the bicycle rack. The body of the bicycle holder is adapted to be deformed, or compressed, to temporarily disengage from the groove of the bicycle rack, enabling the position of the bicycle holder to be adjusted with respect to the bicycle rack, or the bicycle holder to be removed from the bicycle rack.

According to a second aspect of the invention, the invention relates to a bicycle holder for a bicycle rack having a groove providing a plurality of attachment positions for attaching the bicycle holder to the bicycle rack. The bicycle holder comprises a body, a first and a second displaceable grip portion adapted to grip a first and a second surface of the groove of the bicycle rack to retain the bicycle holder in the groove of the bicycle rack. The bicycle holder further comprises a retaining mechanism adapted to retain the wheel of the bicycle to the bicycle holder. Each of the grip portions comprises a friction surface adapted to cooperate with the first and the second surface of the groove of the bicycle rack, wherein when tightening the retaining mechanism, a force component directed away from the bicycle rack provides for a friction lock between first and second surface of the grip portion and the bicycle rack to prevent the bicycle holder from being displaced with respect to the bicycle rack.

### BRIEF DESCRIPTION OF THE DRAWINGS

Embodiments of the present invention will be described in greater detail with reference to the accompanying figures in which;
figure 1 shows a bicycle mounted on a bicycle rack having a first and a second bicycle holder according to an embodiment of the present invention;
figure 2 shows the bicycle rack of figure 1 wherein the first and the second bicycle holders are arranged to receive the wheels of the bicycle;
figure 3 shows a bicycle holder of the bicycle rack of figure 1 in greater detail;
figure 4 shows the bicycle holder of figure 1 with a view towards the front of the bicycle holder, and the bicycle rack in cross section;
figure 5 shows the bicycle holder of figure 1 in perspective and with a view towards the front side of the bicycle holder;
figure 6 shows the bicycle holder of figure 1 in perspective and with a view partly towards the wheel facing side and the front side of the bicycle holder;
figure 7 shows the bicycle holder of figure 1 in perspective and with a view towards the wheel facing side of the bicycle holder and;
figure 8 shows the bicycle holder of figure 1 in perspective and with a view towards the bicycle rack facing side of the bicycle holder.

### DETAILED DESCRIPTION OF PREFERRED EMBODIMENTS

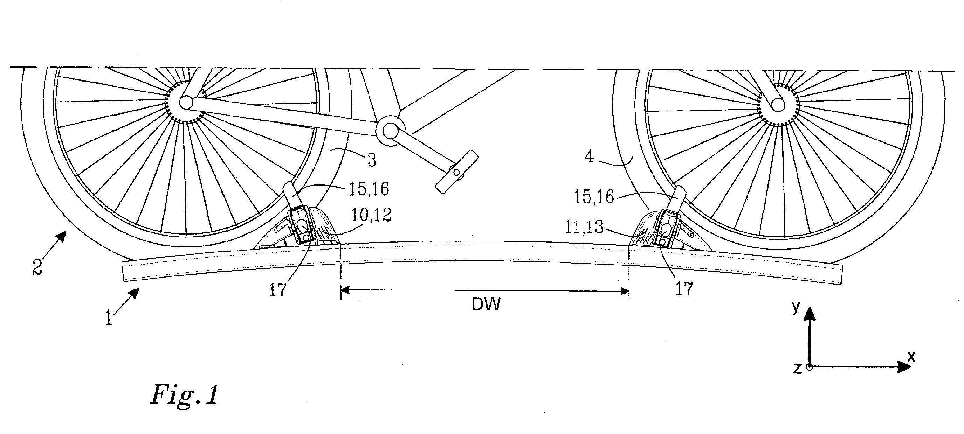

Figure 1 shows a bicycle rack 1 for transporting a bicycle 2 on a vehicle (not shown), such as a car. The bicycle 2, which is schematically illustrated, has a first and a second wheel 3, 4, which in figure 1 rests on the bicycle rack 10, so that the bicycle 2 is positioned in a transport position. In the transport position, the bicycle 2 can be transported on the bicycle rack using the vehicle. A first and a second bicycle holder 10, 11, in the shown embodiment adapted to hold a wheel, thus hereafter referred to only as the first and the second wheel holder 12, 13 of the bicycle rack 1. The bicycle holder could however be adapted to hold or retain other parts of the bicycle 2, such as parts of the frame. The wheels 3, 4 of the bicycle are retained to the wheel holders 12, 13 using a retaining mechanism 15, partly formed by a strap element 16 and a strap element lock 17. To enable bicycles of different sizes to be transported, a distance DW between the first and the second wheel holders 12, 13 can be changed.

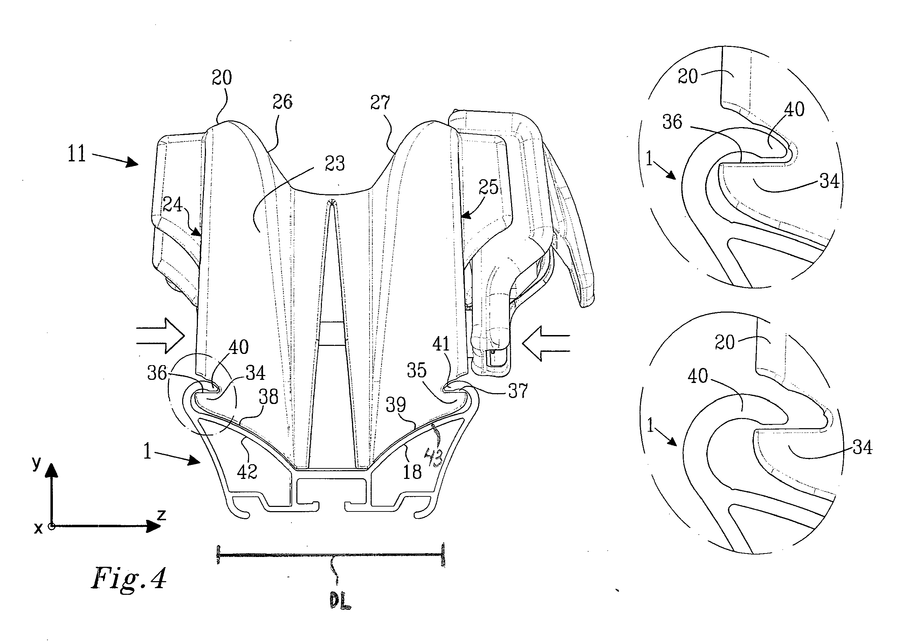

For the purpose of orientation, the length of the bicycle rack extends along the X axis, the height along the Y axis and a width along the Z axis, as shown in figures 1 and 4. Likewise, the length of the wheel holder extends along the X axis, the height along the Y axis and the width along the Z axis, as shown in figures 1 and 4.

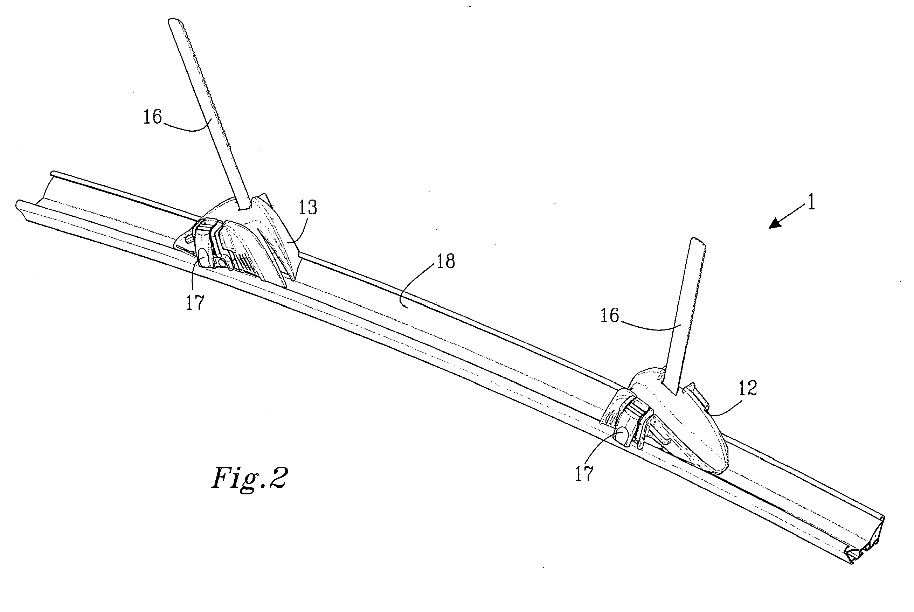

Figure 2 shows the bicycle rack 1 without a bicycle mounted thereon. The strap elements 16 of the first and the second wheel holder 12, 13 are disconnected from the strap element locks 17.

The bicycle rack 1 is, in the shown embodiment, manufactured from extruded aluminum having a substantially U-shaped cross section adapted to receive parts the wheels 3, 4 of the bicycle 2. The substantfally U-shaped cross section is formed by groove 18 which also is adapted to cooperate with the first and the second wheel holder 12, 13 to retain the wheel holders 12, 13 to the bicycle rack 1 and to permit the wheel holders 12, 13 to slide along the length of the bicycle rack 1, i.e. along the X axis. As the wheel holders 12, 13 can be positioned at a plurality of different positions, bicycles of different sizes can be transported using the bicycle rack 1. The wheels 3, 4 of the bicycle 2 rests against the bicycle rack 1 and the wheel holders 12, 13 are positioned between the rest points of the wheels 3, 4, or optionally on either side of the rest points of the wheels 3, 4. The wheels 3, 4 is not intended to actually rest on the wheel holders 12, 13.

The wheel holders 12, 13 can be displaced, in this case slided, along the length of the bicycle rack 1, and thus be positioned substantially at an infinite number of different positions. In comparison, bicycle racks having predetermined positions for wheel holders only permits a limited number of positions for the wheel holders, and thus also a limited number of different sizes of bicycles which can be transported.

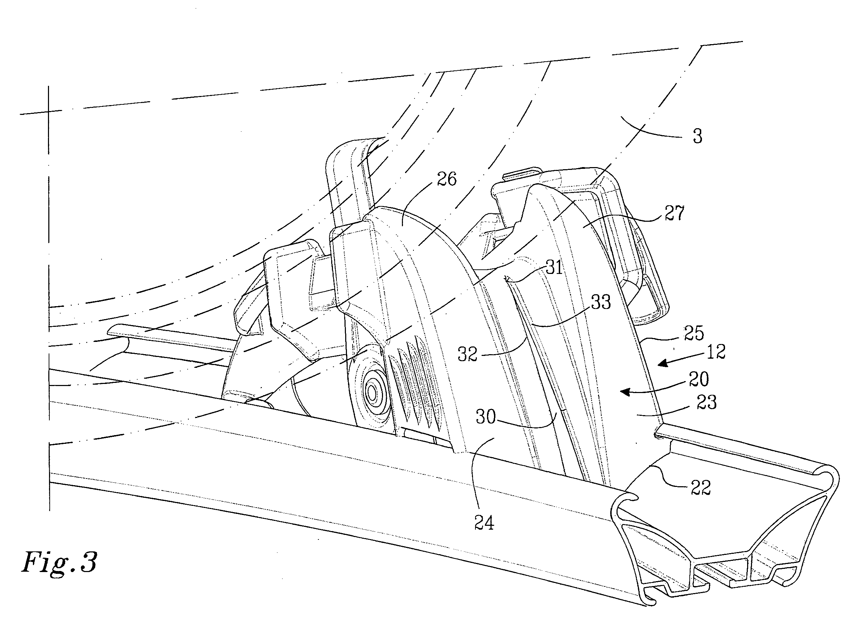

Figure 3 shows the first wheel holder 12 in greater detail, parts of the bicycle rack 1 and the first wheel 3. The strap element 16 of the retaining mechanism 15 is not shown for the sake of clarity. The wheel holder 12 is formed by a body 20. The body 20 has a wheel facing side 21, an opposite bicycle rack facing side 22, a front side 23, a first and a second longitudinal side 24, 25. The wheel facing side 21 merges into the bicycle rack facing side 22, forming a slope like wheel facing side 21. As is also noticed, a first and second flange 26, 27 (only a part of the second flange 27 is visible in figure 3) extends out from the first and the second longitudinal sides 24, 25, to support a part of the first wheel 3 against a tilting motion.

A slit 30, is arranged in the front side 23 of the body 20, i.e. in the peripheral wall of the body 20, enabling the body 20 to be temporarily deformed, or compressed. The slit 30 extends through the whole of the thickness of the front side 23 and has a substantially triangular form having an apex 31 and a first and a second side 32, 33. Instead of a slit 30, the body 20 can be provided with a weak point, or a weak section, to enable the body 20 to be deformed, or compressed.

Figure 4 shows the wheel holder 12 with a view towards the front side 23 of the body 20. The bicycle rack 1 is shown with a cross section. The U-shape of the cross section of the bicycle rack can be seen, formed by the groove 18 of the bicycle rack 1. The bicycle rack 1 further comprises a first and a second flange 40, 41 which extends along the length of the bicycle rack 1. The flanges 40, 41 provides for grip surfaces to the wheel holder 12 and enables the wheel holder 12 to be displaced along the length of the bicycle rack 1 while at the same time they provide for retaining means to retain the wheel holder 12 to the bicycle rack 1. The flanges 40, 41 has a hook like cross section, as is seen in figure 4, and are adapted to cooperate with parts of the wheel holder 12.

The body 20 of the wheel holder 12 comprises a first and a second grip portion 34, 35 adapted to cooperate in a retaining manner with the flanges 40, 41 of the bicycle rack, and thus be cooperating with the groove 18 of the bicycle rack 1. The first and the second grip portions 34, 35 are formed integrally with the body 20 of the wheel holder 12, but could optionally be attached to the body 20 of the wheel holder 12, The first and the second grip portions 34, 35 are adapted to retain the wheel holder 12 to the bicycle rack 1 by means of the intersecting flanges 40, 41 of the bicycle rack 1, and refrain it from being displaced along the length of the bicycle rack 1 using friction as primary retaining means. The first and the second grip portions 34, 35 are further separated by a distance DL, along the Z axis and the width of the body 20.

The body 20 has a relaxed state, or a restricted state in which the first and the second grip portions 34, 35 are forced towards the inner surface of the groove 18 of the bicycle rack 1, so that the first and the second grip portions 34, 35 and the flanges 40, 41 are engaged.

If a user would like to displace the wheel holder 12 along the length of the bicycle rack 1, i.e. along the X axis, the user simply compress the first and second longitudinal sides 25, 25 of the body 20 towards each other, as indicated by the arrows in figure 4. The first and the second grip portions 34, 35 are displaced towards each other and disengage the first and the second flange 40, 41 of the bicycle rack 1, as is seen in the enlargements of figure 4. When the first and the second grip portions 34, 35 are disengaged, the wheel holder 12 can be slided, or displaced, along the length of the bicycle rack 1. As a user releases the body 20, the first and the second grip portions 34, 35 will return to their original position. The body 20 will either return to a relaxed state in which the first and the second grip portions 34, 35 engages the first and the second flange 40, 41, or to a restricted state, in which the first and the second grip portions 34, 35 are positioned adjacent the first and the second flanges 40, 41 in an abutting manner with a force, so that the first and the second grip portions 34, 35 engages the first and the second flange 40, 41. As described herein, the body 20 can be said to operate with an expander lock function, in the sense that after being deformed or compressed, it expands back to its original size or configuration. In this case the first and the second grip portions returns to their position underneath the flanges 40, 41 of the groove 18 of the bicycle rack 1.

The groove 18 of the bicycle rack 1 has a first and a second tilting surface 42, 43 which corresponds to the form of bicycle rack facing side 22 of the body 20. Tilting surfaces 38, 39 of the body 20 are tilted so that a blunt, or stub, apex-like part of the body 20 is formed towards the bicycle rack 1, as seen in figure 4. The tilting surfaces 38, 39, 42, 43 of the wheel holder 12 and the groove 18 of the wheel holder 12 can be configured to impart the body 20 with an upwardly directed force component as the body 20 returns to its relaxed state, or to the restricted state. As is further noticed, the tilting surfaces 38, 39 have an arc shaped form.

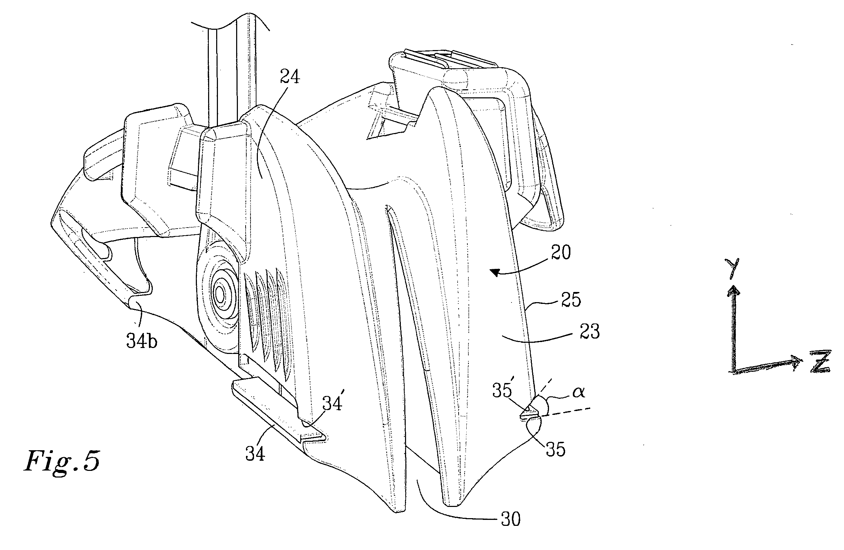

Figures 5-8 show the body 20 of the wheel holder 12 with different views and in perspective. Figure 5 shows the slit 30 arranged on the front side 23 of the body 20 of the wheel holder 12. As is noted, the slit 30 has an open end at the bottom of the front side 23 of the body 20 which is intended to face the bottom of the groove 18 of the bicycle rack 1 during use. The first and the second grip portions 34, 35, and a guiding portion 34b, are shown. The guiding portion 34b is adapted to improve the retaining properties of the wheel holder 12 and to guide the wheel holder 12 when being moved along the length of the bicycle rack 1. Parts of the first and second grip portions 34, 35 comprise a grip friendly surface, such as a pleated surface, to provide a user friendly surface during deformation and displacement of the body 20. The grip portions 34, 35 cooperates with tilting surfaces 34', 35' arranged on each of the first and second longitudinal sides 24, 25 of the body 20, and are arranged at an angle α with respect to the Z axis, wherein the angle α can be between 30-60'. To determine the angle α, figure 5 can be used for orientation.

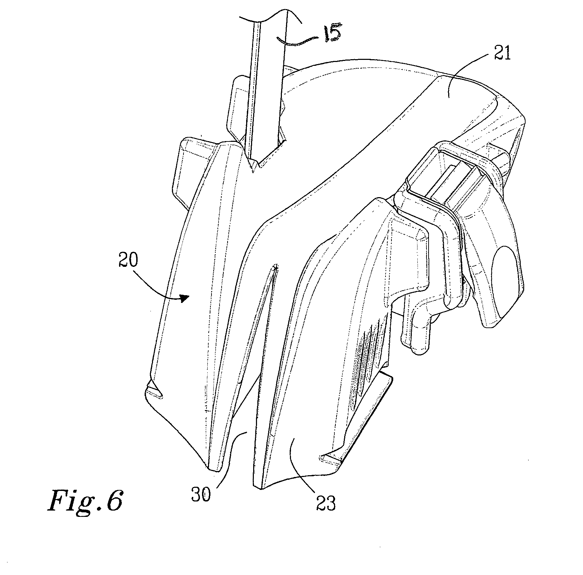

With reference to figures 3 and 6; figure 6 shows parts of the wheel facing side 21 of the body 20. It should be noted that the wheel facing side 21 is not positioned to abut the surface of the wheel 3 of the bicycle 2. When the retaining mechanism 15 (partly shown in figure 6) is tightened around the wheel 3, the retaining mechanism 15 pulls the body 20 towards the wheel 3, the force component is thus directed away from the bicycle rack 1. The wheel holder 12 is retained to the bicycle rack 1 by the first and the second grip portions 34, 35, as better understood from figure 3, and thus enables the wheel holder 12 to be secured to the bicycle rack 1 as the first and the second grip portions 34, 35 cooperate with the flanges 40, 41 of the groove 18. The wheel holder 12 further uses the friction between the first and the second grip portions 34, 35 of the body 20 and the first and the second flange 40, 41 of the bicycle rack 1, to retain the wheel holder 12 in a desired position. A friction lock is thus provided, preventing the wheel holder 12 from being displaced along the length of the bicycle rack 1.

Two wheel holders 12, 13 retains the bicycle 2 to the bicycle rack 1 and provides for a bicycle rack 1 which can be adapted to bicycles of different sizes. The wheel holder 12 thus uses the same retaining mechanism to retain and secure the bicycle with the wheel holder as to readily secure the wheel holder 12 from displacement with respect to the bicycle rack 1. In this sense, both the retaining mechanism 15 and the expander function of the body 20 are used to retain the wheel holder 12 from displacement along the length of the bicycle rack 1.

The first and the second grip portions 34, 35 can be provided with a high friction material, such as a selected thermoplastic material, or with a corrugated, pleated surface, to increase the friction between the first and the second grip portions 34, 35 of the body 20 and the first and the second flanges 40, 41 of the bicycle rack 1, thus improving the friction lock.

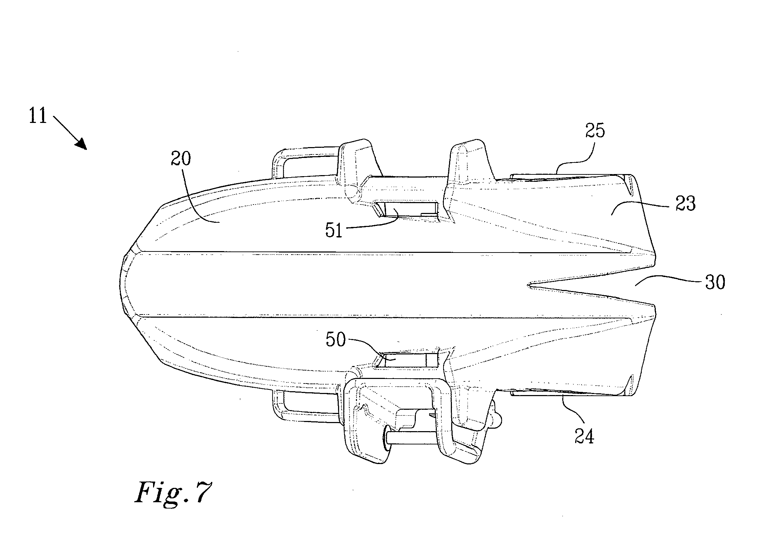

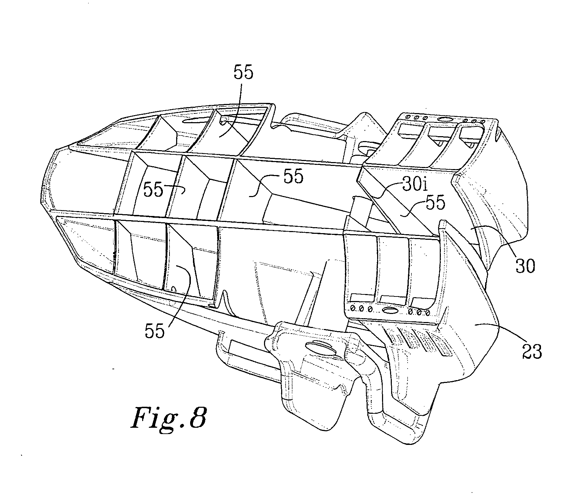

Figure 7 shows the body 20 of the wheel holder 12 from above. A first and a second aperture 50, 51 is arranged at the first and the second longitudinal sides 24, 25 to permit at least one strap element 16 to be attached to the body 20 of the wheel holder 12. As is also noticed, the slit 30, and the front side 23 of the body 20 has a slightly curved form, curving towards the rear of the body 20, which will improve the deformability of the body 20. Figure 8 shows the body 20 from beneath. A plurality of partition walls 55 provides for a rigid body 20. A second slit 30i, or an inner slit 30l, is arranged in one of the partition walls 55. According to an aspect, the body 20 comprises a plurality of slits, or at least two slits 30, 301, to enable the body 20 to be deformed, or compressed, by a user to enable the displacement of the body 20, and thus the wheel holder 12, along the length of the bicycle rack 1. Further visible is a bolt extending through the body adapted to fix the retaining mechanism 15 to the body 20.

The body 20 can be resilient by means of the material used in the body 20, or by an attached member imparting resilient properties to the body 20. For example, the body 20 can be form molded by a thermoplastic material such as polypropylene, polyethylene, polyurethane, Acrylonltrile butadiene styrene (ABS) or mixtures thereof. However, the expander mechanism of the first and the second grip portions, and the mechanism of being temporarily displaceable, can be provided by other resilient means, such as a spring or elastic material positioned between the first and the second grip portion 34, 35. The body 20 could further be partitioned into a first and a second member, connected with hinges or the like and having a resilient member arranged to hold the first and the second grip portions separated, for example.

The body 20 could further comprise a material or a member which improves the resilient property of the body 20. Elastic rubber material, such as synthetic rubber or natural rubber, could be positioned inside of the body 20, e.g. between the partition walls 55, for example.

The bicycle rack 1 can have a straight elongated form as shown in figure 1, or have a curved elongated form.

## Claims

1. A bicycle holder (10, 11) for a bicycle rack (1) adapted to retain a part of a bicycle to said bicycle rack (1), said bicycle holder (10, 11) comprising a body (20), a first grip portion (34) displaceably arranged to a second grip portion (35), said first and second grip portions (34, 35) being adapted to engage a first and a second surface of said bicycle rack (1) thereby retaining said bicycle holder (10, 11) to said bicycle rack (1) from displacement along the length of said bicycle rack (1), **characterised in that**
at least one of said first and said second grip portions (34, 35) of said body (20) is/are adapted to be temporarily displaced in a direction towards the other so that at least one of said first and said second grip portions (34, 35) of said body (20) is temporarily disengaged from said first and second surfaces of said bicycle rack (1), enabling the position of said bicycle holder (10, 11) to be adjusted along the length of said bicycle rack (1), or said bicycle holder (10, 11) to be removed from said bicycle rack (1).

2. The bicycle holder (10, 11) according to claim 1, wherein said bicycle holder is a wheel holder (10, 11), and in that said part of said bicycle (2) is a wheel (3, 4).

3. The bicycle holder (10, 11) according to claim 1 or 2, wherein said bicycle rack has a groove (18) for attaching said bicycle holder (10, 11) to said bicycle rack (1), and in that said first and second surfaces are formed by parts of said groove (18).

4. The bicycle holder (10, 11) according to any of the preceding claims, wherein both of said first and said second grip portions (34, 35) are adapted to be displaced towards each other.

5. The bicycle holder (90, 11) according to any of the preceding claims, wherein said first and said second grip portions (34, 35) of said body (20) are adapted to be temporarily displaced in a direction towards each other by deforming parts of said body (20).

6. The bicycle holder (10, 11) according to any of the preceding claims, wherein said body (20) of said bicycle holder (12, 13) and said first and said second grip portions (34, 35) are formed in a unitary piece of material.

7. The bicycle holder (10, 11) according to any of the preceding claims, wherein said body (20) comprises at least one slit (30, 30i), and in that said first and second grip portions (34, 35) are separated by said at least one slit (30, 30i).

8. The bicycle holder (10, 11) according to claim 7, wherein said body (20) has a wheel facing side (21), a front side (23), and a first and a second longitudinal side (24, 25), and in that said at least one slit (30, 30l) is arranged in said front side (23) of said body (20) of said wheel holder (10, 11).

9. The bicycle holder (10, 11) according to any of the preceding claims, wherein said body (20) has a wheel facing side (21), a front side (23), and a first and a second longitudinal side (24, 25), wherein said first and second grip portions (34, 35) extends out from said first and second longitudinal sides (24, 25).

10. The bicycle holder (10, 11) according to any of the preceding claims, wherein said body (20) of said bicycle holder (10, 11) is formed by a peripheral wall (23, 24, 25) defining a substantially hollow interior, and in that said first and second grip portions (34, 35) are formed by a first and a second portion (34, 35) of said peripheral wall (24, 25).

11. The bicycle holder (10, 11) according to any of the preceding claims, wherein at least parts of said body (20) and/or said first and second grip portions (34, 35) are adapted to be elastically deformable, enabling a user to temporarily deform said first and second grip members (34, 35) towards each other.

12. The bicycle holder (10, 11) according to any of the preceding claims, wherein said first and second grip portions (34, 35) each comprises a grip surface (36, 37) adapted to cooperate with said bicycle rack (1), said grip surfaces (36, 37) of said first and second grip portions (34, 35) are manufactured from a material providing a surface witch high friction between said grip surfaces (36, 37) of said first and second grip portions (34, 35) and said bicycle rack (1).

13. The bicycle holder (10, 11) according to any of the preceding claims, wherein said bicycle holder comprises a retaining mechanism (15, 16) to retain said part of said bicycle (2) to said bicycler holder (10, 11), said retaining mechanism (15, 16) is adapted to cooperate with said first and second grip portions (34, 35) so that upon activation of said retaining mechanism (15, 16), said first and second grip portions (34, 35) are imparted with a force component acting to increase a distance (DL) between said first and said second grip portions (34, 35) of said body (20) of said bicycle holder (12, 13).

14. A bicycle rack (1) comprising a first and a second bicycle holder (10, 11) according to any of the preceding claims, said a bicycle rack (1) comprising a groove (18), said bicycle rack (1) being adapted to be mounted to a vehicle, and in that said first and second bicycle holders (10, 11) are displaceably arranged along said groove (18) of said bicycle rack (1).

15. The bicycle rack (1) according to claim 14, wherein said groove (18) of said bicycle rack (1) is adapted to receive a first and a second wheel (3, 4) of said bicycle (2).

16. A bicycle holder (10, 11) for a bicycle rack (1) having a groove (18) providing a plurality of attachment positions for said bicycle holder (10, 11) to said bicycle rack (1), said bicycle holder (10, 11) comprising a body (20), said bicycle holder (10, 11) comprising a first grip portion (34) displaceably arranged to a second grip portion (35), said first and said second grip portions being adapted to grip a first and a second surface of said bicycle rack (1) to retain said bicycle holder (10, 11) to said bicycle rack (1), said bicycle holder (10, 11) comprising a retaining mechanism (15, 16) adapted to retain part (3, 4) of said bicycle (2) to said bicycle holder (10, 11),
each of said grip portion (34, 35) comprises a friction surface (36, 37) adapted to cooperate with said first and said second surface of said bicycle rack (1), wherein when tightening said retaining mechanism (15, 16), said retaining mechanism (15, 16) imparts a force component to said bicycle holder (10, 11) in a direction away from said bicycle rack (1), said force component providing a friction lock between said first and second surfaces (36, 37) of said grip portion (34, 35) of said body and said bicycle rack (1), to prevent said bicycle holder (10, 11) from being displaced along the length of said bicycle rack (1)
**characterised i**n that
said first and said second grip portions are adapted grip a first and a second surface of said groove (18) of said bicycle rack (1).

## Patentansprüche

1. Fahrradhalterung (10, 11) für einen Fahrradträger (1), die so ausgelegt ist, dass sie einen Teil eines Fahrrads an dem Fahrradträger (1) festhält, wobei die Fahrradhalterung (10, 11) einen Körper (20) umfasst, einen ersten Greifabschnitt (34), der versetzbar zu einem zweiten Greifabschnitt (35) angeordnet ist, wobei der erste und zweite Greifabschnitt (34, 35) so ausgelegt sind, dass sie mit einer ersten und einer zweiten Fläche des Fahrradträgers (1) in Eingriff stehen, wodurch die Fahrradhalterung (10, 11) an dem Fahrradträger (1) festgehalten wird, damit sie sich nicht entlang der Länge des Fahrradträgers (1) verschiebt,
**dadurch gekennzeichnet, dass**
der erste und/oder der zweite Greifabschnitt (34, 35) des Körpers (20) so ausgelegt ist/sind, dass er bzw. sie vorübergehend in eine Richtung auf den anderen zu versetzt wird bzw. werden, sodass der erste und/oder der zweite Greifabschnitt (34, 35) des Körpers (20) vorübergehend von der ersten und zweiten Fläche des Fahrradträgers (1) gelöst wird bzw. werden, wodurch die Position der Fahrradhalterung (10, 11) entlang der Länge des Fahrradträgers (1) angepasst werden kann, oder die Fahrradhalterung (10, 11) von dem Fahrradträger (1) abgenommen werden kann.

2. Fahrradhalterung (10, 11) nach Anspruch 1, wobei es sich bei der Fahrradhalterung um einen Radhalter (10, 11) handelt und dass es sich bei dem Teil des Fahrrads (2) um ein Rad (3, 4) handelt.

3. Fahrradhalterung (10, 11) nach Anspruch 1 oder 2, wobei der Fahrradträger eine Auskehlung (18) zum Befestigen der Fahrradhalterung (10, 11) an dem Fahrradträger (1) aufweist, und dass die erste und zweite Fläche von Teilen der Auskehlung (18) geformt sind.

4. Fahrradhalterung (10, 11) nach einem der vorhergehenden Ansprüche, wobei sowohl der erste als auch der zweite Greifabschnitt (34, 35) so ausgelegt sind, dass sie aufeinander zu versetzt werden.

5. Fahrradhalterung (10, 11) nach einem der vorhergehenden Ansprüche, wobei der erste und der zweite Greifabschnitt (34, 35) des Körpers (20) so ausgelegt sind, dass sie vorübergehend in einer Richtung aufeinander zu versetzt werden, indem Teile des Körpers (20) verformt werden.

6. Fahrradhalterung (10, 11) nach einem der vorhergehenden Ansprüche, wobei der Körper (20) der Fahrradhalterung (12, 13) und der erste und der zweite Greifabschnitt (34, 35) als einteiliges Stück Material ausgebildet sind.

7. Fahrradhalterung (10, 11) nach einem der vorhergehenden Ansprüche, wobei der Körper (20) mindestens einen Schlitz (30, 30i) umfasst, und dass der erste und zweite Greifabschnitt (34, 35) durch den mindestens einen Schlitz (30, 30i) getrennt sind.

8. Fahrradhalterung (10, 11) nach Anspruch 7, wobei der Körper (20) eine dem Rad zugewandte Seite (21), eine Vorderseite (23) und eine erste und eine zweite Längsseite (24, 25) aufweist, und dass der mindestens eine Schlitz (30, 30i) in der Vorderseite (23) des Köpers (20) des Radhalters (10, 11) angeordnet ist.

9. Fahrradhalterung (10, 11) nach einem der vorhergehenden Ansprüche, wobei der Körper (20) eine dem Rad zugewandte Seite (21), eine Vorderseite (23) und eine erste und eine zweite Längsseite (24, 25) aufweist, wobei der erste und zweite Greifabschnitt (34, 35) von der ersten und zweiten Längsseite (24, 25) aus nach außen verlaufen.

10. Fahrradhalterung (10, 11) nach einem der vorhergehenden Ansprüche, wobei der Körper (20) der Fahrradhalterung (10, 11) von einer Umfangswand (23, 24, 25) gebildet ist, die einen im Wesentlichen hohlen Innenraum definiert, und dass der erste und zweite Greifabschnitt (34, 35) von einem ersten und einem zweiten Abschnitt (34, 35) der Umfangswand (24, 25) geformt sind.

11. Fahrradhalterung (10, 11) nach einem der vorhergehenden Ansprüche, wobei zumindest Teile des Körpers (20) und/oder des ersten und zweiten Greifabschnitts (34, 35) so ausgelegt sind, dass sie elastisch verformbar sind, wodurch ein Benutzer das erste und zweite Greifelement (34, 35) vorübergehend aufeinander zu verformen kann.

12. Fahrradhalterung (10, 11) nach einem der vorhergehenden Ansprüche, wobei der erste und zweite Greifabschnitt (34, 35) jeweils eine Greiffläche (36, 37) umfassen, die so ausgelegt ist, dass sie mit dem Fahrradträger (1) zusammenarbeitet, die Greifflächen (36, 37) des ersten und zweiten Greifabschnitts (34, 35) aus einem Material gefertigt sind, das eine Fläche mit einer hohen Reibung zwischen den Greifflächen (36, 37) des ersten und zweiten Greifabschnitts (34, 35) und dem Fahrradträger (1) versieht.

13. Fahrradhalterung (10, 11) nach einem der vorhergehenden Ansprüche, wobei die Fahrradhalterung einen Festhaltemechanismus (15, 16) umfasst, um den Teil des Fahrrads (2) an der Fahrradhalterung (10, 11) festzuhalten, der Festhaltemechanismus (15, 16) so ausgelegt ist, dass er mit dem ersten und zweiten Greifabschnitt (34, 35) zusammenarbeitet, sodass beim Betätigen des Festhaltemechanismus (15, 16) eine Kraftkomponente auf den ersten und zweiten Greifabschnitt (34, 35) ausgeübt wird, die so wirkt, dass sie einen Abstand (DL) zwischen dem ersten und dem zweiten Greifabschnitt (34, 35) des Körpers (20) der Fahrradhalterung (12, 13) vergrößert.

14. Fahrradträger (1), der eine erste und eine zweite Fahrradhalterung (10, 11) nach einem der vorhergehenden Ansprüche umfasst, wobei der Fahrradträger (1) eine Auskehlung (18) umfasst, der Fahrradträger (1) so ausgelegt ist, dass er an einem Fahrzeug angebracht wird, und dass die erste und zweite Fahrradhalterung (10, 11) verschiebbar entlang der Auskehlung (18) des Fahrradträgers (1) angeordnet sind.

15. Fahrradträger (1) nach Anspruch 14, wobei die Auskehlung (18) des Fahrradträgers (1) so ausgelegt ist, dass sie ein erstes und ein zweites Rad (3, 4) des Fahrrads (2) aufnimmt.

16. Fahrradhalterung (10, 11) für einen Fahrradträger (1) mit einer Auskehlung (18), die für eine Vielzahl von Befestigungspositionen der Fahrradhalterung (10, 11) an dem Fahrradträger (1) sorgt, wobei die Fahrradhalterung (10, 11) einen Körper (20) umfasst, die Fahrradhalterung (10, 11) einen ersten Greifabschnitt (34) umfasst, der versetzbar zu einem zweiten Greifabschnitt (35) angeordnet ist, der erste und der zweite Greifabschnitt so ausgelegt sind, dass sie eine erste und eine zweite Fläche des Fahrradträgers (1) ergreifen, um die Fahrradhalterung (10, 11) an dem Fahrradträger (1) festzuhalten, wobei die Fahrradhalterung (10, 11) einen Festhaltemechanismus (15, 16) umfasst, der so ausgelegt ist, dass er einen Teil (3, 4) des Fahrrads (2) an der Fahrradhalterung (10, 11) festhält,
wobei jeder der Greifabschnitte (34, 35) eine Reibungsfläche (36, 37) umfasst, die so ausgelegt ist, dass sie mit der ersten und der zweiten Fläche des Fahrradträgers (1) zusammenarbeitet, wobei beim Festziehen des Festhaltemechanismus (15, 16) der Festhaltemechanismus (15, 16) eine Kraftkomponente auf die Fahrradhalterung (10, 11) in eine Richtung weg von dem Fahrradträger (1) ausübt, wobei die Kraftkomponente für einen Reibschluss zwischen der ersten und zweiten Fläche (36, 37) des Greifabschnitts (34, 35) des Körpers und dem Fahrradträger (1) sorgt, um zu verhindern, dass die Fahrradhalterung (10, 11) entlang der Länge des Fahrradträgers (1) verschoben wird
**dadurch gekennzeichnet, dass**
der erste und der zweite Greifabschnitt so ausgelegt sind, dass sie eine erste und eine zweite Fläche der Auskehlung (18) des Fahrradträgers (1) ergreifen.

## Revendications

1. Support de vélo (10, 11) pour porte-vélo (1) adapté pour retenir une partie d'un vélo sur ledit porte-vélo (1), ledit support de vélo (10, 11) comprenant un corps (20), une première portion de préhension (34) agencée de manière mobile par rapport à une seconde portion de préhension (35), lesdites première et seconde portions de préhension (34, 35) étant adaptées pour venir en prise avec une première et une seconde surface dudit porte-vélo (1), retenant ainsi ledit support de vélo (10, 11) sur ledit porte-vélo (1) pour qu'il ne se déplace pas le long de la longueur dudit porte-vélo (1),
**caractérisé en ce que**
au moins l'une de ladite première et de ladite seconde portion de préhension (34, 35) dudit corps (20) est/sont adaptée(s) pour être déplacée(s) temporairement en direction de l'autre de sorte qu'au moins l'une de ladite première et de ladite seconde portion de préhension (34, 35) dudit corps (20) est temporairement dégagée desdites première et seconde surfaces dudit porte-vélo (1), permettant à la position dudit support de vélo (10, 11) d'être ajustée le long de la longueur dudit porte-vélo (1), ou audit support de vélo (10, 11) d'être retiré dudit porte-vélo (1).

2. Support de vélo (10, 11) selon la revendication 1, dans lequel ledit support de vélo est un support de roue (10, 11), et en ce que ladite partie dudit vélo (2) est une roue (3, 4).

3. Support de vélo (10, 11) selon la revendication 1 ou 2, dans lequel ledit porte-vélo présente une cannelure (18) pour fixer ledit support de vélo (10, 11) audit porte-vélo (1), et en ce que lesdites première et seconde surfaces sont formées par des parties de ladite cannelure (18).

4. Support de vélo (10, 11) selon l'une quelconque des revendications précédentes, dans lequel les deux de ladite première et de ladite seconde portions de préhension (34, 35) sont adaptées pour être déplacées l'une vers l'autre.

5. Support de vélo (10, 11) selon l'une quelconque des revendications précédentes, dans lequel ladite première et ladite seconde portion de préhension (34, 35) dudit corps (20) sont adaptées pour être déplacées temporairement en direction l'une de l'autre en déformant des parties dudit corps (20).

6. Support de vélo (10, 11) selon l'une quelconque des revendications précédentes, dans lequel ledit corps (20) dudit support de vélo (12, 13) et ladite première et ladite seconde portion de préhension (34, 35) sont formés dans une pièce unique de matériau.

7. Support de vélo (10, 11) selon l'une quelconque des revendications précédentes, dans lequel ledit corps (20) comprend au moins une fente (30, 30i), et en ce que lesdites première et seconde portions de préhension (34, 35) sont séparées par ladite au moins une fente (30, 30i).

8. Support de vélo (10, 11) selon la revendication 7, dans lequel ledit corps (20) présente un côté faisant face à la roue (21), un côté avant (23), et un premier et un second côté longitudinal (24, 25), et en ce que ladite au moins une fente (30, 30i) est agencée dans ledit côté avant (23) dudit corps (20) dudit support de roue (10,11).

9. Support de vélo (10, 11) selon l'une quelconque des revendications précédentes, dans lequel ledit corps (20) présente un côté faisant face à la roue (21), un côté avant (23), et un premier et un second côté longitudinal (24, 25), lesdites première et seconde portions de préhension (34, 35) s'étendant vers l'extérieur depuis lesdits premier et second côtés longitudinaux (24, 25).

10. Support de vélo (10, 11) selon l'une quelconque des revendications précédentes, dans lequel ledit corps (20) dudit support de vélo (10, 11) est formé par une paroi périphérique (23, 24, 25) délimitant un intérieur essentiellement creux, et en ce que lesdites première et seconde portions de préhension (34, 35) sont formées par une première et une seconde partie (34, 35) de ladite paroi périphérique (24, 25).

11. Support de vélo (10, 11) selon l'une quelconque des revendications précédentes, dans lequel au moins des parties dudit corps (20) et/ou desdites première et seconde portions de préhension (34, 35) sont adaptées pour être déformables élastiquement, permettant à un utilisateur de déformer temporairement lesdits premier et second éléments de préhension (34, 35) l'un vers l'autre.

12. Support de vélo (10, 11) selon l'une quelconque des revendications précédentes, dans lequel lesdites première et seconde portions de préhension (34, 35) comprennent chacune une surface de préhension (36, 37) adaptée pour coopérer avec ledit porte-vélo (1), lesdites surfaces de préhension (36, 37) desdites première et seconde portions de préhension (34, 35) sont fabriquées à partir d'un matériau assurant une surface à friction élevée entre lesdites surfaces de préhension (36, 37) desdites première et seconde portions de préhension (34, 35) et ledit porte-vélo (1).

13. Support de vélo (10, 11) selon l'une quelconque des revendications précédentes, dans lequel ledit support de vélo comprend un mécanisme de retenue (15, 16) pour retenir ladite partie dudit vélo (2) sur ledit support de vélo (10, 11), ledit mécanisme de retenue (15, 16) est adapté pour coopérer avec lesdites première et seconde portions de préhension (34, 35) de sorte que lors de l'activation dudit mécanisme de retenue (15, 16), une composante de force est transmise auxdites première et seconde portions de préhension (34, 35), qui agit pour augmenter une distance (DL) entre ladite première et ladite seconde portion de préhension (34, 35) dudit corps (20) dudit support de vélo (12, 13).

14. Porte-vélo (1) comprenant un premier et un second support de vélo (10, 11) selon l'une quelconque des revendications précédentes, ledit porte-vélo (1) comprenant une cannelure (18), ledit porte-vélo (1) étant adapté pour être monté sur un véhicule, et en ce que lesdits premier et second supports de vélo (10, 11) sont agencés de manière mobile le long de ladite cannelure (18) dudit porte-vélo (1).

15. Porte-vélo (1) selon la revendication 14, dans lequel ladite cannelure (18) dudit porte-vélo (1) est adaptée pour recevoir une première et une seconde roue (3, 4) dudit vélo (2).

16. Support de vélo (10, 11) pour porte-vélo (1) présentant une cannelure (18) offrant une pluralité de positions de fixation pour ledit support de vélo (10, 11) sur ledit porte-vélo (1), ledit support de vélo (10, 11) comprenant un corps (20), ledit support de vélo (10, 11) comprenant une première portion de préhension (34) agencée de manière mobile par rapport à une seconde portion de préhension (35), ladite première et ladite seconde portion de préhension étant adaptées pour saisir une première et une seconde surface dudit porte-vélo (1) pour retenir ledit support de vélo (10, 11) sur ledit porte-vélo (1), ledit support de vélo (10, 11) comprenant un mécanisme de retenue (15, 16) adapté pour retenir une partie (3, 4) dudit vélo (2) sur ledit support de vélo (10, 11),
chacune desdites portions de préhension (34, 35) comprend une surface de friction (36, 37) adaptée pour coopérer avec ladite première et ladite seconde surface dudit porte-vélo (1), dans lequel lorsque ledit mécanisme de retenue (15, 16) est serré, ledit mécanisme de retenue (15, 16) transmet une composante de force audit support de vélo (10, 11) dans une direction s'éloignant dudit porte-vélo (1), ladite composante de force permettant un verrouillage par friction entre lesdites première et seconde surfaces (36, 37) de ladite portion de préhension (34, 35) dudit corps et ledit porte-vélo (1), pour empêcher ledit support de vélo (10, 11) d'être déplacé le long de la longueur dudit porte-vélo (1)
**caractérisé en ce que**
ladite première et ladite seconde portion de préhension sont adaptées pour saisir une première et une seconde surface de ladite cannelure (18) dudit porte-vélo (1).
